# EUROPEAN PATENT APPLICATION

(11) **EP 4 748 889 A1**
(43) Date of publication of application: **27.05.2026**
(21) Application number: 24214920.1
(22) Date of filing: 22.11.2024
(51) Int. Cl.: C08L 95/00

(54) **PAVING COMPOSITION INCLUDING HIGH RECYCLED BITUMINOUS MATERIAL CONTENT**

(71) Applicant: ArrMaz Products Inc., Mulberry, FL 33860 (US)
(72) Inventor: The designation of the inventor has not yet been filed
(74) Representative: Bandpay & Greuter

(57) **Abstract**

An asphalt additive may comprise at least an alkoxylate and an amine. The asphalt additive may be used in an asphalt composition further comprising recycled bituminous material to lead to better mechanical properties, enhanced rutting resistance, and improved sustainability by maximizing the use of recycled materials.

## Description

### Field of the Invention,

This invention relates generally to a paving composition, and more particularly, but not by way of limitation, to a paving composition that incorporates a high percentage of recycled bituminous material combined with an additive.

### Description of the Related Art

Asphalt mixture is a highly complex material composed of aggregates, asphalt composition (AKA asphalt binder), and air voids, each contributing to the overall microstructure. Prior research has demonstrated that the way load is transmitted within asphalt mixtures is heavily dependent on the interaction points between aggregates and binder. These interactions, particularly the mechanical and geometric characteristics of the aggregates and binder, are key determinants in the stress-strain distribution across the asphalt mixture. Studies further emphasized the importance of contact geometry factors like contact area, the number of contact zones, and their orientation, which play a critical role in how stress is distributed within the aggregate skeleton. These findings underscore that asphalt mixture performance, particularly its resistance to rutting, is not solely a function of density, but rather the internal structure of the aggregate framework.

Traditional methods have relied on density measurements to evaluate asphalt mixtures, often assuming that higher density correlates with better performance. However, evidence suggests that mixtures with identical densities can exhibit vastly different behaviors under load. This observation points to the fact that internal structure analysis, particularly focusing on aggregate contacts and stress paths, is a more accurate predictor of performance, especially in terms of rutting resistance.

In the compaction process, an initially thicker layer of asphalt mastic facilitates movement between aggregates. Asphalt mastic is a composite material consisting of the asphalt binder mixed with fine aggregate (mineral filler, sand, or both). As compaction progresses and stress increases, the mastic layer becomes thinner, which results in greater shearing resistance. This interaction between the binder and the aggregates becomes increasingly complex, particularly as temperatures change. Contrary to conventional assumptions that higher compaction temperatures inherently improve workability by reducing binder viscosity, research has shown that the relationship between temperature, density, and shear resistance is more nuanced. There is often a point where increasing temperature improves workability, but beyond a certain threshold, further increases lead to diminished compaction efficiency due to heightened shear resistance. This phenomenon, referred to as the "Tender Zone," presents a risk of over-compaction, which can adversely impact pavement durability.

While traditional compaction strategies focus on reaching a target density or air void content, such metrics do not fully capture the material's performance under actual service condition. The relationship between aggregates and the binder during compaction - essentially a packing process with asphalt mastic shearing - requires a deeper understanding of these factors to optimize asphalt performance.

Based on the foregoing, it is desirable to provide a paving composition that addresses these limitations by enhancing the integration of recycled bituminous materials into asphalt mixtures using a novel warm mix additive.

It is further desirable for the additive to alter the internal packing dynamics during compaction and production.

It is further desirable for the paving composition to significantly improve rutting resistance through better control of contact points, contact length, and orientation within the aggregate skeleton by optimizing how aggregates interact within the mix, providing more efficient load distribution, which is critical for long-term pavement performance.

It is further desirable for the paving composition to focus on increasing the utilization of Recycled bituminous material that include Recycled Asphalt Pavement, also called Reclaimed Asphalt Pavement (RAP) and Recycled Asphalt Shingles (RAS) without sacrificing mechanical properties, improving workability and compaction at lower temperatures while also reducing the amount of fresh binder required.

It is further desirable for the paving composition to facilitate the efficient mixing and bonding of recycled materials, which is essential in modern, more sustainable asphalt production.

It is further desirable for the paving composition to enhance adhesion promotion and anti-stripping properties in asphalt mixtures, with the additive improving the binder-aggregate interaction and providing better mechanical performance and moisture resistance.

### Brief Description

In general, in a first aspect, the invention relates to an asphalt additive comprising at least:
- an alkoxylate, preferably the alkoxylate comprises at least one of ethylene oxide moieties, propylene oxide moieties, butylene oxide moieties and combinations thereof, more preferably the alkoxylate comprises a copolymer, preferably the copolymer comprises either a random or a block copolymer, more preferably the block copolymer comprises at least one of a diblock, triblock or tetrablock copolymer and
- an amine, preferably the amine comprises at least one of a polyamine, an amidoamine, an amidopolyamine an imidazoline, an imidazoamine, an imidazo(poly)amine, and any combination thereof.

The degree of alkoxylation of the alkoxylate may be from about 3 to about 100, preferably from about 4 to about 75, more preferably from about 4 to about 50. Examples of suitable degrees of alkoxylation may include about 30-70. In another preferred embodiment, the degree of alkoxylation of the alkoxylate is from, about 40 to 60, more preferably from about 45 to55.

, The alkoxylate may be of formula 1:

[A-O-B-]_{d}Z (1)

wherein:
A is chosen from a hydrogen atom, a group G, a group 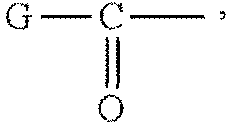 a group 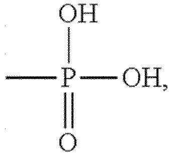 and a group 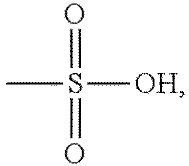
where G represents a linear or branched, saturated or unsaturated C₁-C₃₀ hydrocarbon-based chain optionally comprising at least one aromatic ring, and optionally substituted with at least one phosphate group, preferentially a single phosphate group,
B represents a divalent group containing at least one repeating unit of alkylene oxide type,
d is equal to 1 or to 2, and
Z is chosen from a hydrogen atom, a radical of formula Z1 and a radical of formula Z2: 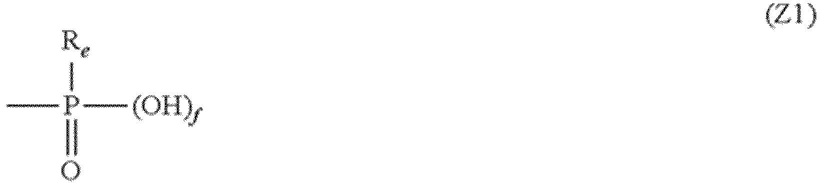 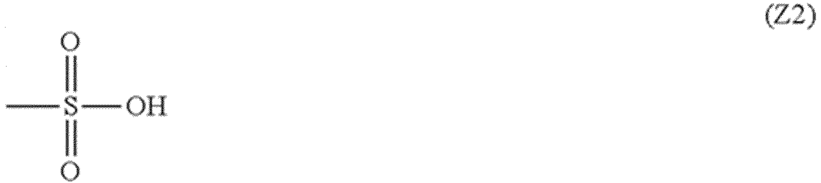
where R represents a hydrogen atom or a linear or branched C₁-C₆ alkyl group, f is equal to 0, 1 or 2,
e is equal to 0 or to 1, and d+e+f is equal to 3,
a group G, and a group 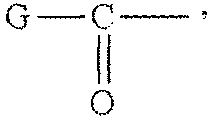
where G is as defined above,
it being understood that when d is equal to 1, then Z is chosen from a hydrogen atom, a radical of formula Z1, a radical of formula Z2, a group G, and a group 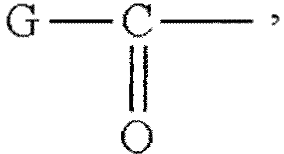
where G is as defined above,
and that when d is equal to 2, then Z represents Z1, e is equal to zero (0) and P is linked to two groups [A-O-B-] which may be identical or different, preferentially identical, as defined above. Preferably, A and Z each represent hydrogen.

The additive may comprise the alkoxylate in an amount of less than 50 wt%, preferably less than about 40 wt%, more preferably less than about 30 wt%, even more preferably less than about 20 wt%, further preferably less than about 20 wt%, and even further at least about 5 wt% relative to the total weight of the additive.

The amine present in the additive generally has at least one hydrocarbon chain having at least a 4 carbon chain, at least 6 carbon chain, at least 8 carbon chain, at least 12 carbon chain, and no more than 30 carbon chain, preferably the chain being branched or straight or cyclic, saturated or unsaturated.

The additive may comprise greater than 30 wt%, preferably at least about 40 wt%, greater than 50 wt%, preferably greater than about 55 wt%, more preferably at least about 60 wt%, more preferably at least about 70 wt%, more preferably at least about 75 wt%, more preferably at least about 80 wt%, and less than about 95 wt% of amine relative to the total weight of the additive.

The additive may comprise a weight ratio of alkoxylate/amine may be between no more than about 1:30 to about 1:1, preferably no more than about 1:20 to about 1:2, a preferred range is no more than about 1:12 to about 1:3. Examples of suitable ratios may include no more than about 1:15 to about 1:2, less than about 1:12 to about 1:2.5, about 1:10 to about 1:3, no more than about 1:9 to about 1:3.5, no more than about 1:8 to about 1:4. Specific preferred ratios may be about 1:11, about 1:10, about 1:9. about 1:5, about 1:4 and about 1:3.

In a second aspect, the invention relates to an asphalt composition comprising:
- the additive as defined above and
- a bitumen composition comprising at least one of virgin bitumen and/or bitumen from recycled bituminous material, preferably the recycled bituminous material selected from at least one of recycled asphalt shingles, recycled asphalt pavement and a combination thereof.

The asphalt composition may comprise the additive at a loading level of up to about 5 wt%, with a preferred range of at least about 0.05 wt%, advantageously 0.1 wt%, more preferably around about 0.3 wt%, and further preferably up to about 0.5 wt% relative to the total amount of asphalt composition. The asphalt composition may comprise a source of bitumen such as at least one of the following of petroleum based asphalt, asphalt cement (AC), pitch, coal tar, asphalt, vacuum tower bottoms (VTB), asphalt residues, performance grade (PG) asphalts, flux, petroleum products, non-petroleum based products, or combinations thereof. In one embodiment, the asphalt composition may be in a form of an emulsion.

The asphalt composition may comprise the bitumen composition in an amount of greater than 60wt%, preferably greater than 70 wt%, preferably greater than 80wt%, preferably greater than 90 wt%, preferably greater than 95 wt%, preferably greater than 98%, preferably greater than 99% relative to the total weight of the asphalt composition. Optionally, the asphalt composition may include other additives than the additive comprising the amine and the alkoxylate disclosed herein.

The asphalt composition may further comprises an additional additive, preferably the additional additive selected from the group of a surfactant, a polyphosphoric acid, a polymer, a wax, a fluxant, an organic acid, an inorganic acid other than polyphosphoric acid, an ester of a fatty acid, a resin component, an oil from a vegetal or mineral source and derivatives thereof, an organic fiber, an inorganic fiber, a polymer and any combination thereof, more preferably the surfactant functions as an asphalt antistrip, more preferably the polyphosphoric acid comprises one selected from the group of pyrophosphoric acid, triphosphoric and metaphosphoric acids with phosphonic acid, pyrophosphates, and other similar compounds comprising at least one (OH-)P-O group and any combination thereof, more preferably the waxes comprises one selected from the group of Fischer-Tropsch waxes, functionalized waxes and any combination thereof, more preferably the resin component comprises one selected from the group of a rosin acid, a modified rosin acid, a tall oil pitch, a pine tar pitch, a pine rosin, a tall oil rosin, asphaltites, and any combinations thereof, more preferably the organic fiber comprises one selected from the group of cellulose fiber, cotton fiber, polypropylene fiber, polyester fiber, polyvinyl alcohol fiber, polyamide fiber and any combination thereof, more preferably the inorganic fiber comprises one selected from the group of glass fiber, metal fiber, a carbon fiber and any combination thereof, and more preferably the polymer comprises a polymer generally used in order to improve the mechanical performance of the bitumen and/orthe mixture, still more preferably the polymer comprises one selected from the group of styrene/butadiene rubbers, styrene/butadiene block copolymers, ethylene/vinyl acetate copolymers, polyethylene, other alpha-polyolefins and any combination thereof.

According to another aspect, the invention deals with an asphalt mixture comprising the asphalt composition as defined above and aggregates, wherein the aggregates are chosen from the group of fresh aggregates, recycled aggregates, recycled asphalt pavements which is a recycled composition comprising aggregate and asphalt and any combinations thereof, preferably the asphalt mixture comprises at least recycled aggregates, recycled asphalt pavements and any combinations thereof.

The asphalt mixture may comprise the fresh aggregate in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 90 wt%, about 80 wt% to about 95 wt% based on the total weight of the aggregate present in the asphalt mixture, or combinations thereof and/or the asphalt mixture comprises the recycled aggregate, or aggregates from recycled asphalt pavement or combination thereof in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 95 wt% based on the total weight of the aggregate present in the asphalt mixture, or combinations thereof.

In a third aspect, the invention relates to a preparation method of the asphalt mixture as defined above, wherein the additive, the bitumen and the aggregate are mixed, applied, compacted, and combinations thereof at a temperature of no more than about 180°C, preferably no more than about 150°C, more preferably no more than about 125°C, still more preferably no more than about 110°C.

### Brief Description of the Drawing

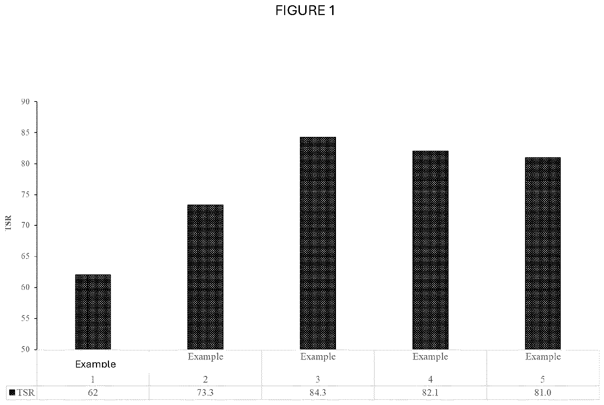

Figure 1 is a graph showing the impact of EO/PO and amidoamine on Tensile Strength Ratio (TSR).

Other advantages and features will be apparent from the following description and from the claims.

### Detailed Description of the Invention

The devices and methods discussed herein are merely illustrative of specific manners in which to make and use this invention and are not to be interpreted as limiting in scope.

While the devices and methods have been described with a certain degree of particularity, it is to be noted that many modifications may be made in the details of the construction and the arrangement of the devices and components without departing from the spirit and scope of this disclosure. It is understood that the devices and methods are not limited to the embodiments set forth herein for purposes of exemplification.

Virgin bitumen means a bitumen which has not already been contacted with aggregates for the preparation of asphalt mixtures or has not already been formed into another product, e.g., an asphalt shingle with or without granules.

Fresh aggregate means aggregate which has not already been contacted with a bitumen or an asphalt composition for the preparation of asphalt mixtures.

An asphalt composition is a blend of a bitumen composition and the asphalt additive described herein.

A bitumen composition is a composition comprising at least one of virgin bitumen and/or bitumen from recycled bituminous material, preferably the recycled bituminous material selected from at least one of recycled asphalt shingles, recycled asphalt pavement and a combination thereof.

An asphalt mixture means a mixture of an asphalt composition and aggregates.

The fresh aggregate typically is a mineral aggregate. Mineral aggregates are generally products from quarries, e.g., granite, limestones and combinations thereof. The aggregate is not limited granite or limestone, they are only exemplary.

Recycled aggregates are typically aggregates that are reclaimed from an asphalt mixture, aggregates present in recycled asphalt pavements, recycled concrete.

In general, in a first aspect, the invention relates to a paving composition (an asphalt mixture), that incorporates a high percentage of Recycled Asphalt Pavement (RAP) and/or Recycled Asphalt Shingle (RAS), preferably 30 wt% or more, combined with an asphalt additive (also described herein as an "additive") relative to the total weight of the paving composition.

In terms of a weight ratio of alkoxylate to amine, the weight ratio may be between no more than about 1:30 to about 1:1, preferably no more than about 1:20 to about 1:2, a preferred range is no more than about 1:12 to about 1:3. Examples of suitable ratios may include no more than about 1:15 to about 1:2, less than about 1:12 to about 1:2.5, about 1:10 to about 1:3, no more than about 1:9 to about 1:3.5, no more than about 1:8 to about 1:4. Specific preferred ratios may be about 1:11, about 1:10, about 1:9. about 1:5, about 1:4 and about 1:3.

This additive may consist of a blend of an alkoxylate with an amine, such as an amidoamine.

An asphalt additive is comprising at least:
- an alkoxylate, preferably the alkoxylate comprises at least one of ethylene oxide moieties, propylene oxide moieties, butylene oxide moieties and combinations thereof, more preferably the alkoxylate comprises a copolymer, preferably the copolymer comprises either a random or a block copolymer, more preferably the block copolymer comprises at least one of a diblock, triblock or tetrablock copolymer and
- an amine, preferably the amine comprises at least one of a polyamine, an amidoamine, an amidopolyamine an imidazoline, imidazoamine, imidazo(poly)amine and any combination thereof.

The alkoxylate may include ethoxylate units, propoxylate units, butoxylates units, preferably ethoxylate units, propoxylate units, or combinations thereof. The degree of alkoxylation of the alkoxylate refers to the number of alkoxy groups, like ethylene oxide and/or propylene oxide and/or butylene oxide added to a molecule during the alkoxylation process thereof.

The degree of alkoxylation may be at least about 3, preferably at least about 4, more preferably at least about 7, still more preferably at least about 10, even more preferably at least about 14, further preferably at least about 17, even further preferably at least about 20, still further preferably at least about 25 and up to about 100, more preferably up to about 75, still more preferably up to about 50. Preferably, the degree of alkoxylation of the alkoxylate is from 3 to 100, preferably from 4 to 80, more preferably from 4 to 70. For given embodiments suitable, degrees of alkoxylation may be from about 30 to70, from about 40 to 60, from about 45 to 55.

The paving composition (AKA asphalt mixture) may comprise the additive at a loading level of up to about 5 wt%, with a preferred range of at least about 0.05wt%, preferably 0.1 wt%, more preferably around about 0.3 wt%, and further preferably up to about 0.5 wt%, relative to the total asphalt content in the paving composition, including fresh aggregate and RAP and /or RAS. The additive may provide warm mix functionality, allowing the composition to be mixed and applied at cooler temperatures than a typical hot mix asphalt with no additive, although the additive is also suitable for hot mix applications.

The alkoxylate may be a random or block copolymer, which in turn may be at least a diblock, triblock, or tetrablock copolymer. Typical alkoxylate moieties may include ethylene oxide moieties, propylene oxide moieties, butylene oxide moieties, or a combination thereof.

The alkoxylate may have formula 1:

[A-O-B-]_{d}Z (1)

wherein:
A is chosen from a hydrogen atom, a group G, a group 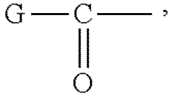
a group 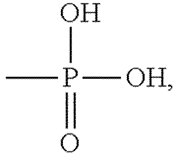 and a group 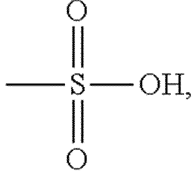
where G represents a linear or branched, saturated or unsaturated C₁-C₃₀ hydrocarbon-based chain optionally comprising at least one aromatic ring, and optionally substituted with at least one phosphate group, preferentially a single phosphate group,
B represents a divalent group containing at least one repeating unit of alkylene oxide type,
d is equal to 1 or to 2, and
Z is chosen from a hydrogen atom, a radical of formula Z1 and a radical of formula Z2: 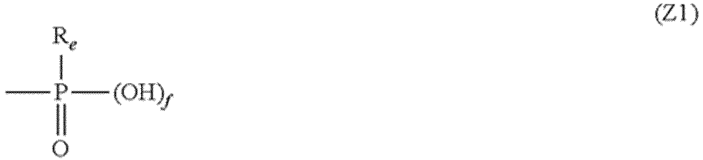 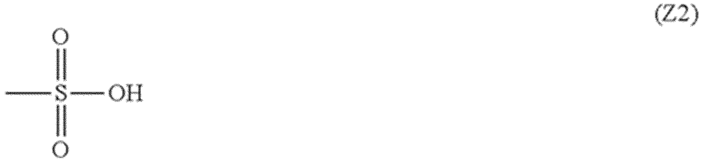
where R represents a hydrogen atom or a linear or branched C1-C6 alkyl group, f is equal to 0, 1 or 2,
e is equal to 0 or to 1, and d+e+f is equal to 3,
a group G, and a group 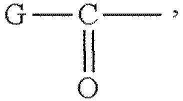
where G is as defined above,
it being understood that when d is equal to 1, then Z is chosen from a hydrogen atom, a radical of formula Z1, a radical of formula Z2, a group G, and a group 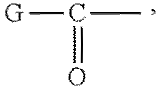
where G is as defined above,
and that when d is equal to 2, then Z represents Z1, e is equal to zero (0) and P is linked to two groups [A-O-B-] which may be identical or different, preferentially identical, as defined above.

Preferably, Z is a hydrogen atom or a group G, which is a linear or branched, saturated or unsaturated C₁-C₃₀ hydrocarbon-based chain optionally comprising at least one aromatic ring.

In the context of the present invention, the term "alkylene oxide" preferentially means butylene oxide (BO), propylene oxide (PO) or ethylene oxide (EO), it being understood that a "divalent group containing at least one repeating unit of alkylene oxide type" is a divalent group which may include one or more BO and/or PO and/or EO repeating units.

More preferentially, B represents a divalent group comprising repeating units of propylene oxide (PO) and/or ethylene oxide (EO) type, generally distributed randomly or in blocks, preferentially in blocks. Even more preferentially, B represents a block or random copolymer of ethylene oxide and propylene oxide comprising between about 3 and about 100 repeating units, with a mass ratio (ethylene oxide/copolymer) of between about 1 percent and about 70 percent.

Preferably, A denotes a hydrogen atom, B denotes a divalent group comprising repeating units of butylene oxide (BO), propylene oxide (PO) and/or ethylene oxide (EO) type, generally distributed randomly or in blocks, preferentially in blocks, d is equal to 1 and Z denotes a hydrogen atom.

Even more preferentially, A denotes a hydrogen atom, B represents a block, alternating or random copolymer comprising one or more ethylene oxide units and/or one or more propylene oxide units, and/or one or more butylene oxide units, and comprising a total of between about 4 and about 100 repeating units, d is equal to 1 and Z denotes a hydrogen atom.

Even more preferentially, A denotes a hydrogen atom, B represents a block, alternating or random copolymer comprising one or more ethylene oxide units and one or more propylene oxide units, and comprising a total of between about 3 and about 100 repeating units, d is equal to 1 and Z denotes a hydrogen atom.

The additive may comprise the alkoxylate in an amount of less than 50 wt%, preferably less than about 40 wt%, more preferably less than about 30 wt%, even more preferably less than about 15 wt%, further preferably less than about 10 wt%, and even further at least about 5 wt%. Preferably, the alkoxylate in an amount of less than 50 wt% to about 45 wt%, about 45 wt% to about 40 wt%, about 40 wt% to about 35 wt%, about 35 wt% to about 30wt%, about 30 wt%, to about 25 wt%, about 25 wt% to about 20 wt%, about 20 wt% to about 15 wt%, about 15 wt% to about 10 wt%, about 10 wt% to at least about 5 wt% or combinations thereof. More preferably, the additive comprises from 5 to 50 wt%, more preferably from 10 to 40 wt%, and even more preferably from 15 to 30 wt% of the alkoxylate. More preferably, the additive comprises from 1 to 40wt%, preferably from 2 to 35%, more preferably from 5% to 20 wt% of alkoxylate based on the total weight of the additive.

The additive may comprise the amine, which may be a polyamine, an amidoamine, an amidopolyamine an imidazoline, imidazoamine, imidazo(poly)amine or combination thereof, in an amount greater than 30 wt%, preferably greater than 40 wt%, in an amount greater than 50 wt%, preferably greater than 55 wt%, more preferably at least 60 wt%, more preferably at least 68 wt%, more preferably at least 70 wt%, more preferably at least 75 wt%, more preferably at least 80 wt%, and less than 95 wt% relative to the total weight of the additive. Preferably, the additive comprises from 50 to 90 wt%, more preferably from 55 to 90 wt%, and even more preferably from 60 to 90 wt% of the amine.

The amine comprises at least one hydrocarbon chain having at least4 carbon atoms, at least 6 carbon atoms, at least 8 carbon atoms, at least 12 carbon atoms, and no more than 30 carbon atoms, the amine and hydrocarbon chain being chemically bonded together. Preferably, the hydrocarbon chain comprises between 6 and 18 carbon atoms. The hydrocarbon chain may comprise a branched or a straight or a saturated or an unsaturated hydrocarbonated chain. Preferably, the hydrocarbon amine comprises only one straight hydrocarbon chain.

In an embodiment, when the additive comprises less than 80 wt% of amine, the additive comprises an amount of alkoxylate higher than 10 wt% relative to the total weight of the additive.

The additive may comprise a weight ratio of alkoxylate/amine may be between no more than about 1:30 to about 1:1, preferably no more than about 1:20 to about 1:2, a preferred range is no more than about 1:12 to about 1:3. Examples of suitable ratios may include no more than about 1:15 to about 1:2, less than about 1:12 to about 1:2.5, about 1:10 to about 1:3, no more than about 1:9 to about 1:3.5, no more than about 1:8 to about 1:4. Specific preferred ratios may be about 1:11, about 1:10, about 1:9. about 1:5, about 1:4 and about 1:3.

Solvent may or may be not present. Solvents may be chosen from esters, ketones, alcohols, polyols, e.g. glycol, as well as mixtures thereof.

In a preferred embodiment, the additive comprises an alkoxylate, preferably the alkoxylate comprises at least one of ethylene oxide moieties, propylene oxide moieties, butylene oxide moieties and combinations thereof, more preferably the degree of alkoxylation of the alkoxylate being from 3 to 100, and an amine, the amine comprising at least one of a polyamine, an amidoamine, an amidopolyamine an imidazoline, imidazoamine, imidazopolyamine, and any combination thereof, the amine comprising one hydrocarbon chain with at least 12 carbon atoms, and no more than 30 carbon atoms, the amine and hydrocarbon chain being chemically bonded together, the weight ratio of alkoxylate/amine being between no more than about 1:30 to about 1:1, preferably no more than about 1:20 to about 1:2, a preferred range is no more than about 1:12 to about 1:3.

The invention relates also to a method of making the additive with the amine, the method comprising mixing the alkoxylate and the amine.

The additive may be combined with a virgin bitumen, optionally neat virgin bitumen, recycled aggregates, recycled bituminous material or fresh aggregates or a combination thereof to get added as a paving composition.

An asphalt composition comprises the additive as defined above and a bitumen composition comprising at least one of virgin bitumen and/or bitumen from recycled bituminous material, preferably the recycled bituminous material selected from at least one of Recycled Asphalt Shingles, Recycled Asphalt Pavement and a combination thereof.

The recycled bituminous material may comprise at least one of recycled asphalt pavement, recycled asphalt singles, or a combination thereof. The asphalt composition may comprise the bitumen composition in an amount of greater than 60 wt%, preferably greater than 70 wt%, preferably greater than 80 wt%, preferably greater than 90 wt%, preferably greater than 95% , preferably greater than 98%, preferably greater than 99% relative to the total weight of the asphalt composition.

The total asphalt composition may comprise greater than 5 wt%, preferably greater than 10 wt%, preferably greater than 15 wt%, preferably greater than 20 wt%, preferably greater than 25wt%, preferably greater than 30 wt%, preferably greater than 40 wt%, preferably greater than 50 wt%, preferably greater than 60 wt%, preferably greater than 70 wt%, preferably greater than 80 wt%, preferably less than 95 wt% bitumen from the recycled bituminous material relative to the total weight of the asphalt composition. More preferably the bitumen from the recycled bituminous material is greater than 10wt% and up to 95wt%, preferably greater than about 10wt% and less than about 80wt%, still more preferably greater than about 10wt% and less than about 70wt%, even more preferably greater than about 20wt% and less than about 60wt%, relative to the total weight of the asphalt composition.

The asphalt composition may comprise an asphalt emulsion and/or an asphalt foam. Sources of the bitumen in the asphalt composition may include at least one of petroleum based asphalt, asphalt cement (AC), pitch, coaltar, asphalt, vacuum tower bottoms (VTB), asphalt residue, performance grade (PG) asphalts, flux, petroleum products, non-petroleum based products, or combinations thereof.

The asphalt composition further comprises an additional additive, preferably the additional additive selected from the group of a surfactant, a polyphosphoric acid, a polymer, a wax, a fluxant, an organic acid, an inorganic acid other than polyphosphoric acid, an ester of a fatty acid, a resin component, an oil from a vegetal or mineral source and derivatives thereof, an organic fiber, an inorganic fiber, a polymer and any combination thereof, more preferably the surfactant functions as an asphalt antistrip, more preferably the polyphosphoric acid comprises one selected from the group of pyrophosphoric acid, triphosphoric and metaphosphoric acids with phosphonic acid, pyrophosphates, and other similar compounds comprising at least one (OH-)P-O group and any combination thereof, more preferably the waxes comprises one selected from the group of Fischer-Tropsch waxes, functionalized waxes and any combination thereof, more preferably the resin component comprises one selected from the group of a rosin acid, a modified rosin acid, a tall oil pitch, a pine tar pitch, a pine rosin, a tall oil rosin, asphaltites, and any combinations thereof, more preferably the organic fiber comprises one selected from the group of cellulose fiber, cotton fiber, polypropylene fiber, polyester fiber, polyvinyl alcohol fiber, polyamide fiber and any combination thereof, more preferably the inorganic fiber comprises one selected from the group of glass fiber, metal fiber, a carbon fiber and any combination thereof, and more preferably the polymer comprises a polymer generally used in order to improve the mechanical performance of the bitumen and/orthe mixture, still more preferably the polymer comprises one selected from the group of styrene/butadiene rubbers, styrene/butadiene block copolymers, ethylene/vinyl acetate copolymers, polyethylene, other alpha-polyolefins and any combination thereof.

In a preferred embodiment, the asphalt composition comprises :
- an additive comprising an alkoxylate, preferably the alkoxylate comprises at least one of ethylene oxide moieties, propylene oxide moieties, butylene oxide moieties and combinations thereof, more preferably the degree of alkoxylation of the alkoxylate being from 3 to 100, and an amine, the amine comprising at least one of a polyamine, an amidoamine, an amidopolyamine an imidazoline, imidazoamine, imidazo(poly)amine, and any combination thereof, the amine comprising at least one hydrocarbon chain with at least 12 carbon atoms and no more than 30 carbon atoms, the amine and hydrocarbon chain being chemically bonded together, the weight ratio of alkoxylate/amine being between no more than about 1:30 to about 1:1, preferably no more than about 1:20 to about 1:2, a preferred range is no more than about 1:12 to about 1:3 and
- a bitumen composition comprising at least one of virgin bitumen and or bitumen from recycled asphalt product, preferably a bitumen composition comprising at least one bitumen from recycled asphalt product, preferably the bitumen from recycled asphalt product in an amount of 10 to 95 % based on the total weight of the asphalt composition, preferably from 10% to 80%, more preferably from 10% to 70%, even more preferably from 20% to 60% based on the total weight of the asphalt composition.

An asphalt mixture comprises the asphalt composition as above and aggregates, wherein the aggregates are chosen from the group of fresh aggregates, recycled aggregates, recycled asphalt pavements and any combinations thereof, preferably the asphalt mixture comprises at least one selected from the group of recycled aggregates, recycled asphalt pavements and any combinations thereof.

The asphalt mixture may comprise the fresh aggregate in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 90 wt% based on the total weight of the aggregate present in the asphalt mixture or combinations thereof and/or the asphalt mixture comprises the recycled aggregate or aggregates from recycled asphalt pavement or combination thereof in an amount of at least about 5 wt% to about 20 wt%, about 20 wt% to about 30 wt%, about 30 wt% to about 40 wt%, about 40 wt% to about 50wt%, about 50 wt% to about 60 wt%, about 60 wt% to about 70 wt%, about 70 wt% to about 80 wt%, about 80 wt% to about 95 wt% based on the total weight of the aggregate present in the asphalt mixture, or combinations thereof.

In a preferred embodiment, the asphalt mixture comprises :
- an additive comprising an alkoxylate, preferably the alkoxylate comprises at least one of ethylene oxide moieties, propylene oxide moieties, butylene oxide moieties and combinations thereof, more preferably the degree of alkoxylation of the alkoxylate being from 3 to 100, and an amine, the amine comprising at least one of a polyamine, an amidoamine, an amidopolyamine an imidazoline, imidazoamine, imidazo(poly)amine, and any combination thereof, the amine comprising at least one hydrocarbon chain with at least 12 carbon atoms, and no more than 30 carbon atoms, the amine and hydrocarbon chain being chemically bonded together, the weight ratio of alkoxylate/amine being between no more than about 1:30 to about 1:1, preferably no more than about 1:20 to about 1:2, a preferred range is no more than about 1:12 to about 1:3 and
- at least one of virgin bitumen and/or bitumen from recycled bituminous material, preferably virgin bitumen and bitumen from recycled bituminous material and
- from 10wt% to 90wt%, preferably from 20wt% to 80wt%, more preferably from 20wt% to 60wt% based on the total weight of the asphalt mixture of a recycled aggregate, the recycled aggregate being either recycled concrete or aggregate present in recycled asphalt pavement or any combination thereof.

The invention also relates to a method of making the additive comprising the amine, the method comprising mixing the alkoxylate and the amine.

Regarding method of making the asphalt composition which includes recycled bituminous material, methods of incorporating the recycled bituminous material into the asphalt composition may include preheating the recycled bituminous material (generally above 100°C), without exceeding a certain limit in order to avoid smokes and further oxidation of the bitumen. An advantageous aspect of this method is that the recycled bituminous material is softened, and thus its incorporation and mixing together with the virgin bitumen and the asphalt additive is facilitated.

Another approach is introducing the recycled bituminous material at ambient temperature directly into a hot mixer (generally at a temperature of above 100°C), the mixer may contain fresh aggregate. The heating of the recycled bituminous material takes place and then the mixing with hot virgin bitumen composition may take place. The methods described in the present invention comprise the use of any of the asphalt mixture production techniques known in the art, for example those where the different components are directly mixed at the same or different temperatures, those where a bitumen composition is an emulsion or a foam may be used, as a total or partial replacement of the virgin bitumen, in the bitumen composition. Further the bitumen composition may include the additional additive in the form of an oil, the oil may also be in the form of an emulsion or a foam.

In one embodiment, the process of the present invention comprises the step of mixing at least one recycled bituminous material with optionally, but preferably, mineral aggregates, optionally virgin bitumen and the asphalt additive with or without one or more of the additional additive.

In another embodiment, the process of the present invention comprises the step of mixing at least one of the recycled bituminous material, optionally, but preferably, the mineral aggregates, the asphalt additive, optionally at least one of the additional additive, water, optionally with a breaking control additive, optionally, but preferably together with an emulsion of virgin bitumen. The breaking control additives are well known in the art, and generally refer to water solubilized-emulsifiers, and/or mineral salts that are able to delay the "breaking" of the emulsions of bitumen composition in contact with water and/or air and/or aggregates.

In one embodiment, when fresh aggregates are added in the process of the present invention, their amount preferably ranges from about 5 wt% to about 95 wt%, preferably from about 5 wt % to about 75%, more preferably from about 5 wt % to about 50 wt %, relatively to the total weight of the asphalt mixture.

The present invention also encompasses an asphalt mixture preparation method wherein the at asphalt additive is directly added to the at least one recycled bituminous material before the addition of fresh aggregates and virgin bitumen.

According to still another embodiment, the process of the present invention comprises the step of mixing at least one recycled bituminous material the asphalt additive, the fresh aggregates, optionally water, with foamed virgin bitumen comprising at least one additional additive.

According to this embodiment, one alternative consists in foaming the virgin bitumen containing the at least one asphalt additive with the injection of water and/or air, according to techniques well known by the skilled in the art. Another alternative consists in first preparing the foamed virgin bitumen and then adding the at least one asphalt additive to the foamed virgin bitumen.

In each of the above embodiments, the asphalt additive may be added in the pure state, or dissolved, dispersed or in the form of an emulsion, in another liquid. Suitable liquids for dissolving, dispersing or bringing into emulsion the asphalt additive, include water, organic solvents, such as for example alcohols, glycols, esters, fatty acids, ketones and the like. Especially suitable is water, particularly for the preparation of asphalt mixtures with bitumen compositions in the form of emulsions or foamed bitumen.

According to a preferred aspect of the present invention, the amount of the asphalt additive in the preparation of recycled bituminous material(s) containing-asphalt mixture generally ranges from about 0.05 wt% to about 10 wt% with respect to the total mass of asphalt composition present in the asphalt mixture, more preferably from about 0.1 wt% to about 5wt%, and even more preferably from about 0.1 wt% to about 2.5 wt%.

According to a preferred embodiment, the fraction of recycled bituminous material(s) ranges from about 5 wt% to about 95 wt% of the total mass of the asphalt mixture, more preferably from about 10 wt% to about 80 wt%, even more preferably from about 10 wt% to about 70 wt%, most preferably from about 20 wt% to about 60 wt%.

Applications of the asphalt mixtures disclosed herein include as a hot mix asphalt, as a warm mix asphalt or as a cold mix asphalt. The bitumen compositions for use in the aforementioned applications may be as an emulsion, a foam or in a neat form.

The asphalt composition may be capable of at least one of being mixed, applied, compacted, and combinations thereof at a temperature of no more than 180°C, preferably no more than 150°C, more preferably no more than 125°C, still more preferably no more than 110°C. While capable of being mixed, applied, and compacted at such warm mixtemperatures, the asphalt composition may additionally be suitable for use at higher temperature.

The technical advantages of this innovative paving composition may include significantly enhanced rutting resistance compared to conventional asphalt mixtures with similar RAP content. Specifically, the composition may offer superior workability, requiring less energy for compaction at typical warm or hot mix temperatures, and may be particularly effective in hot asphalt mixes. The invention may be applicable for a range of uses, including construction and maintenance of roads, highways, sidewalks, parking lots, airport runways, and other rolling surfaces.

Additionally, the additive, when comprising a co-block polymer and amidoamine, may improve both the adhesion-promoting properties and the overall mechanical performance of the asphalt mix. By enabling the use of higher amounts of recycled bituminous material, such as RAP or Recycled Asphalt Shingles (RAS), while reducing the need for fresh bitumen, this invention may contribute to more sustainable and durable paving solutions.

Unlike prior methods, this invention focuses on increasing the utilization of Recycled Asphalt Pavement (RAP) and/or Recycled Asphalt Shingles (RAS) without sacrificing mechanical properties. By using an additive containing an alkoxylate blend (e.g., ethoxylates and propoxylates) combined with amidoamine, the invention may not only improve workability and compaction at lower temperatures but also reduce the amount of fresh binder required. This additive system may facilitate the efficient mixing and bonding of recycled materials, which is essential in modern, environmentally friendly asphalt production.

A significant improvement over existing methods is the ability of this invention to enhance adhesion promotion and anti-stripping properties in asphalt mixtures. The additive may improve the binder-aggregate interaction, providing better mechanical performance and moisture resistance. The innovation lies in leveraging the synergistic effects of the additive components to optimize both the internal structure and the mechanical properties of the mix. This may allow for higher RAP or RAS content, reducing reliance on virgin or fresh materials and contributing to more sustainable construction practices.

In summary, this invention surpasses prior art by introducing a novel mechanism for improving the internal structure of asphalt mixtures through specialized additives, leading to better mechanical properties, and improved sustainability by maximizing the use of recycled materials.

During testing, various additives were studied to explore the efficacy of EO/PO-based additives combined with amidoamines in improving the performance of recycled asphalt mixtures. By optimizing the ratios of these additives, significant improvements were observed in the tensile strength ratio (TSR), particularly in conditions that typically challenge the compaction and adhesion properties of asphalt mixtures. The findings highlight the potential of these additives to enhance the sustainability and performance of asphalt pavements by facilitating the increased use of recycled materials without compromising quality.

The integration of recycled asphalt materials such as Recycled Asphalt Pavement (RAP) and/or Recycled Asphalt Shingles (RAS) into new asphalt mixtures is a critical component of sustainable pavement construction. However, achieving high-performance characteristics, such as resistance to rutting and moisture damage, while incorporating a high percentage of recycled materials presents a significant challenge. Traditional methods often require elevated production temperatures and extensive use of virgin bitumen, leading to increased energy consumption and environmental impact.

### Examples:

This study investigated the use of EO/PO-based additives, combined with amidoamines, to overcome these challenges. The research focused on the impact of these additives on the mechanical properties of asphalt mixtures, particularly in terms of tensile strength ratio (TSR), which is a critical indicator of moisture susceptibility and adhesion promotion.

### Materials and Methods

### Materials:

RAP was sourced and processed to standard specifications. The RAP content is of 40% of the total mix. EO/PO (Ethylene Oxide/Propylene Oxide) was used in varying concentrations to assess its impact on workability and mechanical performance. Amidoamine was evaluated in combination with EO/PO to improve TSR and adhesion promotion.

The tested additives are described in the table below:

The amounts are in weight percentage:

| | 1 comparative | 2 Comparative | 3 invention | 4 invention | 5 invention |
|---|---|---|---|---|---|
| amine | 0 wt% | 85 wt% | 85 wt% | 60 wt% | 60 wt% |
| EO-PO | 0 wt% | 0 wt% | 7.5% | 10% | 15% |
| glycol | 0 wt% | 15 wt% | 7.5% | 30% | 25% |
| Weight ratio | - | - | 0.088 | 0.166 | 0.250 |

With the amine being a mixture of amidoamines comprising branched and linear chains in C16-C18 and between 5 to 10 ethylamine units,

EO-PO being a tri-bock copolymer composed of 8 EO - 50 PO - 8EO.

Asphalt mixture compositions were prepared by mixing at 146°C, and compacting at 135°C.

Asphalt mixture composition comprises 40% RAP, 3.9% virgin asphalt binder (PG 64-22), 56.1% virgin granite aggregate based on total weight of the mixture. The RAP contains 5,2% of aged asphalt. Additive is added as 0.5% by weight of total binder (i.e. binder in virgin +binder in RAP).

The comparative composition 1 corresponds to an asphalt mixture composition prepared without additive.

### Experimental Methods:

Tensile Strength Ratio (TSR) Test: Conducted following AASHTO T 283 (from 2016) to assess the moisture susceptibility and adhesion promotion of the asphalt mixtures, focusing on the impact of EO/PO and amidoamine combinations.

### Results and Discussion : Impact of EO/PO and Amidoamine on Adhesion Promotion

The results of the measured TSR are described in the table below:

| | 1 comparative | 2 Comparative | 3 Invention | 4 invention | 5 invention |
|---|---|---|---|---|---|
| TSR | 62 | 73.3 | 84.3 | 82.1 | 81.0 |

The Superpave Gyratory Compactor tests highlighted the benefits of using EO/PO additives in terms of workability and compactability. The mixtures required less compaction energy, and optimal aggregate packing was achieved even at lower temperatures. The ability to achieve sufficient compaction at lower temperatures without compromising the mixture's structural integrity is a significant advancement. This not only reduces the energy required for asphalt production but also extends the life of the pavement by reducing the likelihood of over-compaction and associated issues. The primary objective of the analysis was to determine the optimal EO/PO ratio in combination with amidoamine that maximizes workability and compactability of the asphalt mixtures, particularly when produced at standard (135°C) compaction temperature. The study reveals a critical inflection point in performance improvement with EO/PO, highlighting that the 7.5-15% range provides the most balanced enhancement in terms of workability and compaction force. The findings of this study underscore the potential of EO/PO-based additives to enhance the performance of recycled asphalt mixtures. By optimizing the ratios of EO/PO amidoamines, it is possible to improve tensile strength, even under conditions that typically challenge asphalt mixture performance. These advancements contribute to more sustainable and efficient pavement construction practices, offering a viable path forward for the increased use of recycled materials in asphalt pavements. The Tensile Strength Ratio (TSR) test results shown in Figure 1 demonstrated a clear improvement in adhesion promotion when EO/PO was used in combination with amidoamine. The criticality of maintaining EO/PO levels between 7.5-15% was evident, as this range provided the optimal balance between workability and tensile strength.

The improvement in TSR values suggests that the EO/PO and amidoamine combination enhances the bond between the asphalt binder and aggregates, thereby reducing moisture susceptibility. This is particularly important in environments where moisture-induced damage is a primary concern. The results also indicate that the optimized EO/PO concentration not only improves mechanical properties but also facilitates easier compaction, as evidenced by the lower CFI (Compaction Force Index) values observed during the SGC (Superpave Gyratory Compactor) tests as described in Mahmoud, A. F. F., & Bahia, H. (2004). Using gyratory compactor to measure mechanical stability of asphalt mixtures. Wisconsin Highway Research Program. The presence of EO/PO appears to enhance the effectiveness of amidoamine, as reflected in the marked increase in TSR values. This indicates that EO/PO contributes to better lubrication of asphalt binder and aggregates in an asphalt mixture resulting in better bonding between the asphalt binder and aggregates, reducing the likelihood of moisture damage and extending pavement life.

Whereas, the devices and methods have been described in relation to the drawings and claims, it should be understood that other and further modifications, apart from those shown or suggested herein, may be made within the spirit and scope of this invention.

## Claims

1. An asphalt additive comprising at least:
- an alkoxylate, preferably the alkoxylate comprises at least one of ethylene oxide moieties, propylene oxide moieties, butylene oxide moieties and combinations thereof, more preferably the alkoxylate comprises a copolymer, preferably the copolymer comprises either a random or a block copolymer, more preferably the block copolymer comprises at least one of a diblock, triblock or tetrablock copolymer and
- an amine, preferably the amine comprises at least one of a polyamine, an amidoamine, an imidazoline, an amido polyamine, an imidazo amine, an imidazo polyamine and any combination thereof.

2. The additive according to claim 1, wherein the degree of alkoxylation of the alkoxylate is from 3 to 100, preferably from 4 to 75, more preferably from 4 to 50.

3. The additive of any one of the preceding claims, wherein the alkoxylate is of formula 1:
[A-O-B-]_{d}Z (1)
wherein:
A is chosen from a hydrogen atom, a group G, a group 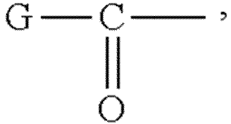
a group 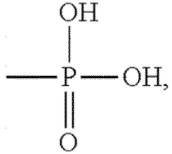 and a group 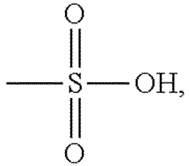 where G represents a linear or branched, saturated or unsaturated C₁-C₃₀ hydrocarbon-based chain optionally comprising at least one aromatic ring, and optionally substituted with at least one phosphate group, preferentially a single phosphate group,
B represents a divalent group containing at least one repeating unit of alkylene oxide type,
d is equal to 1 or to 2, and
Z is chosen from a hydrogen atom, a radical of formula Z1 and a radical of formula Z2: 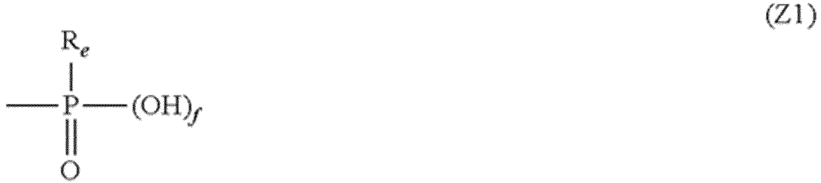 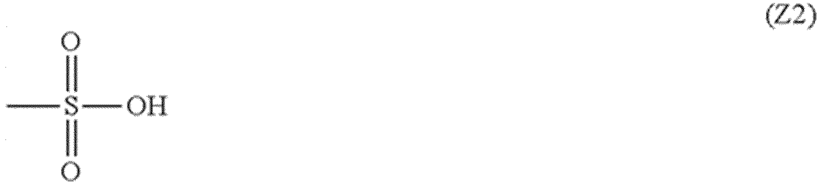
where R represents a hydrogen atom or a linear or branched C₁-C₆ alkyl group,
f is equal to 0, 1 or 2,
e is equal to 0 or to 1, and d+e+f is equal to 3,
a group G, and a group 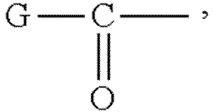
where G is as defined above,
it being understood that when d is equal to 1, then Z is chosen from a hydrogen atom, a radical of
formula Z1, a radical of formula Z2, a group G, and a group 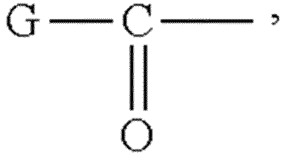
where G is as defined above,
and that when d is equal to 2, then Z represents Z1, e is equal to zero (0) and P is linked to two groups [A-O-B-] which may be identical or different, preferentially identical, as defined above, preferably A and Z each represent hydrogen.

4. The additive according to any one of the preceding claims, wherein it comprises the alkoxylate in an amount of less than 50 wt%, preferably less than about 40 wt%, more preferably less than about 30 wt%, even more preferably less than about 15 wt%, further preferably no more than about 10 wt%, and even further at least about 5 wt% relative to the total weight of the additive.

5. The additive of any one of the preceding claims, wherein the amine comprises at least one hydrocarbon chain having at least a 4 carbon atoms, at least 6 carbon atoms, at least 8 carbon atoms, at least 12 carbon atoms, and no more than 30 carbon atoms, the amine and hydrocarbon chain being chemically bonded together, preferably the chain being branched or straight or saturated or unsaturated, more preferably the chain being straight.

6. The additive of any one of the preceding claims, wherein it comprises an amount greater than 30 wt%, preferably at least about 40 wt%, at least about 50 wt%, preferably at least about 55 wt%, more preferably at least about 60 wt%, more preferably at least about 68 wt%, more preferably at least about 70 wt%, more preferably at least about 75 wt%, more preferably at least about 80 wt%, and less than about 95 wt% of amine relative to the total weight of the additive.

7. The additive according to any one of the preceding claims, wherein the weight ratio of the alkoxylate to the amine (alkoxylate/amine) is between no more than about 1:30 to about 1:1, preferably no more than about 1:20 to about 1:2, a preferred range is no more than about 1:12 to about 1:3.

8. An asphalt composition comprising:
- the additive as defined in any one of the preceding claims; and
- a bitumen composition comprising at least one of virgin bitumen and/or bitumen from recycled bituminous material, preferably the recycled bituminous material selected from at least one of recycled asphalt shingles, recycled asphalt pavement and a combination thereof.

9. The asphalt composition according to claim 8, wherein it comprises the additive at a loading level of up to about 5 wt%, with a preferred range of at least about 0.05 wt%, advantageously 0.1 wt%, more preferably around about 0.3 wt%, and further preferably up to about 0.5 wt% relative to the total amount of asphalt composition.

10. The asphalt composition according to claim 8 or 9 in the form of an asphalt emulsion and/or an asphalt foam, preferably the asphalt composition comprises at least one selected from the group of petroleum based asphalt, asphalt cement (AC), pitch, coal tar, asphalt, vacuum tower bottoms (VTB), asphalt residual, performance grade (PG) asphalts, flux, petroleum products, non-petroleum based products, or combinations thereof.

11. The asphalt composition of any one of the preceding claims 8 to 10, wherein it comprises the bitumen composition in an amount of greater than 60 wt%, preferably greater than 70 wt%, preferably greater than 80 wt%, preferably greater than 90 wt%, preferably greater than 95wt%, preferably greater than 98%, preferably greater than 99% relative to the total weight of the asphalt composition.

12. The asphalt composition of any one of the preceding claims 7 to 11, wherein it further comprises an additional additive, preferably the additional additive selected from the group of a surfactant, a polyphosphoric acid, a polymer, a wax, a fluxant, an organic acid, an inorganic acid other than polyphosphoric acid, an ester of a fatty acid, a resin component, an oil from a vegetal or mineral source and derivatives thereof, an organic fiber, an inorganic fiber, a polymer and any combination thereof, more preferably the surfactant functions as an asphalt antistrip, more preferably the polyphosphoric acid comprises one selected from the group of pyrophosphoric acid, triphosphoric and metaphosphoric acids with phosphonic acid, pyrophosphates, and other similar compounds comprising at least one (OH-)P-O group and any combination thereof, more preferably the waxes comprises one selected from the group of Fischer-Tropsch waxes, functionalized waxes and any combination thereof, more preferably the resin component comprises one selected from the group of a rosin acid, a modified rosin acid, a tall oil pitch, a pine tar pitch, a pine rosin, a tall oil rosin, asphaltites, and any combinations thereof, more preferably the organic fiber comprises one selected from the group of cellulose fiber, cotton fiber, polypropylene fiber, polyester fiber, polyvinyl alcohol fiber, polyamide fiber and any combination thereof, more preferably the inorganic fiber comprises one selected from the group of glass fiber, metal fiber, a carbon fiber and any combination thereof, and more preferably the polymer comprises a polymer generally used in order to improve the mechanical performance of the bitumen and/or the mixture, still more preferably the polymer comprises one selected from the group of styrene/butadiene rubbers, styrene/butadiene block copolymers, ethylene/vinyl acetate copolymers, polyethylene, other alpha-polyolefins and any combination thereof.

13. An asphalt mixture, comprising the asphalt composition as defined in any one of the preceding claims 7 to 12 and aggregates, wherein the aggregates are chosen from the group of fresh aggregates, recycled aggregates, recycled asphalt pavements and any combinations thereof.

14. The asphalt mixture according to claim 13, wherein the asphalt mixture comprises the fresh aggregate in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 90 wt% based on the total weight of the aggregate present in the asphalt mixture, or combinations thereof and/or the asphalt mixture comprises the recycled aggregate or aggregates from the recycled asphalt pavement or combination thereof in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 95 wt% based on the total weight of the aggregate present in the asphalt mixture, or combinations thereof.

15. The asphalt mixture according to claim 13 or14, wherein the asphalt mixture comprises virgin bitumen and bitumen from recycled bituminous material and from 10wt% to 90wt%, preferably from 20wt% to 80wt%, more preferably from 20wt% to 60wt% based on the total weight of the asphalt mixture of a recycled aggregate, the recycled aggregate being either recycled concrete or aggregate present in recycled asphalt pavement or any combination thereof.

16. A preparation method of the asphalt mixture defined in any one of the preceding claims 13 to 15, wherein the additive, the bitumen and the aggregate are mixed, applied, compacted, and combinations thereof at a temperature of no more than about 180°C, preferably no more than about 150°C, more preferably no more than about 125°C, still more preferably no more than about 110°C.
